# EUROPEAN PATENT APPLICATION

(11) **EP 3 533 745 A1**
(43) Date of publication of application: **04.09.2019**
(21) Application number: 18159461.5
(22) Date of filing: 01.03.2018
(51) Int. Cl.: B66B 19/02

(54) **METHOD AND ARRANGEMENT FOR INSTALLING AN ELEVATOR HOISTING ROPE**

(71) Applicant: KONE Corporation, 00330 Helsinki (FI)
(72) Inventor: Helenius, Juha, 00330 Helsinki (FI); Lampinen, Riku, 00330 Helsinki (FI); Juntunen, Mika, 00330 Helsinki (FI); Tudose, Costin, 00330 Helsinki (FI); Kiuru, Antti, 00330 Helsinki (FI); Vaahtera, Janne, 00330 Helsinki (FI)
(74) Representative: Kolster Oy Ab

(57) **Abstract**

The invention relates to a method for installing a hoisting rope (1) into an elevator system, the method comprising providing a rope reel (2) storing a hoisting rope (1); and thereafter unwinding a section of the hoisting rope (1) from the rope reel (2); and arranging the section of the hoisting rope (1) unwound from the rope reel (2) to pass from the rope reel (2) to a rim of a drive wheel (3) of the elevator and around it such that it rests against said rim; and thereafter rotating the drive wheel (3) with a motor (M) for driving the hoisting rope (1) to run around the drive wheel (3).

## Description

### FIELD OF THE INVENTION

The invention relates to installing of a hoisting rope to an elevator system. The elevator can be particularly an elevator for transporting passengers and/or goods.

### BACKGROUND OF THE INVENTION

A need to install a hoisting rope or plural hoisting ropes comes up when a new elevator system is being constructed. Such a need may rise also when an old and worn rope needs to be replaced with a new one. There are several different methods for installing a hoisting rope into an elevator system. Such methods are known where the hoisting ropes are guided into the elevator system end first. For example, such a method is presented in WO2007118928A1, where an installation device is used to move hoisting ropes within an elevator system by pulling. Also such methods are known where the hoisting ropes are lowered in the hoistway from above with a temporarily mounted auxiliary hoist. Also such methods are known where the hoisting ropes are lifted in the hoistway from below with a temporarily mounted auxiliary hoist. These methods have the drawback that separate equipment needs to be used, and they require presence of several persons. These methods often also require that one auxiliary hoist is not sufficient but several auxiliary hoists are needed, which is the case particularly when there are many parallel ropes to be installed. Also such methods are known where the rope is moved and guided into the elevator system end first around a drive wheel. However, a drawback with these solutions has been that it has been difficult to find a simple and efficient solution for moving the hoisting rope with good control of movement of the rope arriving to the drive wheel.

### BRIEF DESCRIPTION OF THE INVENTION

The object of the invention is to provide a method and arrangement by which a hoisting rope can be simply and efficiently installed in an elevator system. An object is particularly to alleviate one or more of the above defined drawbacks of prior art and/or problems discussed or implied elsewhere in the description. Embodiments are presented, *inter alia*, by which a drive wheel can be used for moving the hoisting rope both efficiently and with good control of the rope movement to the drive wheel and forward. Embodiments are presented, *inter alia*, where rope supply to the drive wheel is simple, well controllable and does not necessitate auxiliary motor-driven machinery.

It is brought forward a new method for installing a hoisting rope into an elevator system, the method comprising providing a rope reel storing a hoisting rope; and thereafter unwinding a section of the hoisting rope from the rope reel; and arranging the section of the hoisting rope unwound from the rope reel to pass from the rope reel to a rim of a drive wheel of the elevator and around it such that it rests against said rim; and thereafter rotating the drive wheel with a motor for driving the hoisting rope to run around the drive wheel. With this solution, one or more of the above mentioned advantages and/or objectives are achieved.

Preferable further features and steps are introduced in the following, which further features and steps can be combined with the method individually or in any combination.

In a preferred embodiment, by said rotating, hoisting rope is pulled from the rope reel to the drive wheel. Preferably said pull is arranged to cause unwinding of hoisting rope from the rope reel.

In a preferred embodiment, the method further comprises braking movement of a section of the rope, which extends between the rope reel and the drive wheel, in particular by acting directly on said section. Hereby, traction can be increased simply and efficiently. This increase in traction makes it feasible and reliable to pull the hoisting rope with the drive wheel, which drastically speeds up the rope installation.

In a preferred embodiment, the braking is performed inside the hoistway.

In a preferred embodiment, the braking is performed with a braking device. Preferably, the braking device is mounted inside the hoistway, preferably below the machine room. Hereby, rope tension can be increased efficiently at a relatively close proximity to the drive wheel. Safe rope passage to the drive wheel is simple to arrange from this position. In this way also, the braking device can facilitate in guidance of the hoisting rope.

In a preferred embodiment, the braking device comprises a rotatable brake wheel by which movement of the rope is braked in said braking.

In a preferred embodiment, plurality of hoisting ropes are installed from the same or different rope reels into the elevator system simultaneously in the manner as defined. When plurality of hoisting ropes are installed from different rope reels into the elevator system simultaneously in the manner as defined, the plurality of rope reels can comprise rope reels stacked on top of each other and/or rope reels placed in axial direction of the rope reels beside each other.

In a preferred embodiment, the hoisting rope comprises two ends. The aforementioned unwound section is a section, which extends between an end of the hoisting rope and the rope reel. During said rotating, a first end of the hoisting rope is still on the rope reel. The second, opposite end, is on the opposite side of the drive wheel than the first end. The second end can hang in the hoistway for being lowered to one of the elevator units, i.e. the elevator car or a counterweight.

In a preferred embodiment, the braking device comprises a frame via which the brake wheel is mounted inside the hoistway.

In a preferred embodiment, the drive wheel is mounted in a machine room located above a hoistway, and the hoisting rope passes from the rope reel via the hoistway into the machine room and to the drive wheel mounted therein.

In a preferred embodiment, the method further comprises during said rotating guiding movement of the rope departing from the braking device with a first guide device upwards in the hoistway.

In a preferred embodiment, the method further comprises during said rotating guiding movement of the rope to the braking device with a second guide device located inside the hoistway.

In a preferred embodiment, wherein the first and/or the second guide device is mounted on a frame of the braking device.

In a preferred embodiment, wherein the method further comprises during said rotating guiding movement of the rope from the rope reel into the hoistway with a third guide device, wherein said third guide device is preferably mounted in the door opening, which door opening leads from a landing into the hoistway.

In a preferred embodiment, wherein the frame of the braking device is stationary in the hoistway the time of said rotating.

In a preferred embodiment, wherein the braking device comprises a braking member for braking rotation of said brake wheel, said braking member preferably being a friction pad mounted on a frame of the braking device and arranged to act on a rotatable part of the brake wheel or a part fixedly connected with the brake wheel for braking rotation thereof.

In a preferred embodiment, wherein the hoisting rope is compressed against the rim of a drive wheel with a rotatable compression roller.

In a preferred embodiment, wherein the rope reel is located outside the hoistway during said rotating.

In a preferred embodiment, wherein the rope reel is unwound during said rotating.

In a preferred embodiment, wherein the hoistway accommodates an elevator car and/or a counterweight during said rotating.

In a preferred embodiment, wherein the rope end is moved into proximity of the elevator car or the counterweight by rotating the drive wheel with a motor, and thereafter fixed to the elevator car or the counterweight.

In a preferred embodiment, wherein after said rotating, and before the elevator system is taken into use for transporting passengers and/or goods, the braking device is removed from the hoistway.

In a preferred embodiment, wherein the elevator system is taken into use for transporting passengers and/or goods after the hoisting rope is fixed to an elevator car (and counterweight if the elevator is a counterweighted elevator).

It is also brought forward a new arrangement for installing a hoisting rope of an elevator comprising a rope reel storing a length of a hoisting rope; a drive wheel; and a motor for rotating the drive wheel; wherein a section, that is unwound from the rope reel, of the hoisting rope passes from the rope reel to a rim of the drive wheel of the elevator and around it such that it rests against said rim, and the motor is arranged to rotate the drive wheel for driving the hoisting rope to run around the drive wheel. With this solution, one or more of the above mentioned advantages and/or objectives are achieved.

Preferable further features of the arrangement have been brought forward in context of the method above as well as in the following, which further features can be combined with the arrangement individually or in any combination.

In a preferred embodiment, the arrangement comprises a braking device for braking movement of the section of the hoisting rope, which extends between the rope reel and the drive wheel.

In a preferred embodiment, wherein braking device is arranged to act directly on said section of the hoisting rope, which extends between the rope reel and the drive wheel.

In a preferred embodiment, the rope departs from the braking device upwards in vertical direction or at an angle from vertical direction.

In a preferred embodiment, the braking device is mounted inside the hoistway below the machine room.

In a preferred embodiment, the braking device comprises a rotatable brake wheel arranged to brake movement of the rope.

In a preferred embodiment, wherein the braking device comprises a pair of rotatable rope wheels compressing the rope from opposite sides between them, at least one of the rope wheels being a brake wheel arranged to brake movement of the rope extending between the pair of rope wheels.

In a preferred embodiment, wherein the braking device comprises a frame via which the brake wheel, the pair of rotatable rope wheels is mounted inside the hoistway.

In a preferred embodiment, the drive wheel is mounted in a machine room located above a hoistway, and the rope passes via the hoistway into the machine room and to the drive wheel mounted therein.

In a preferred embodiment, comprises a first guide device located inside the hoistway for guiding movement of the rope departing from the braking device upwards in the hoistway.

In a preferred embodiment, comprises a second guide device located inside the hoistway for guiding movement of the rope to the braking device.

In a preferred embodiment, the rope reel is arranged to unwound during said rotating.

In a preferred embodiment, the hoisting rope passes into the hoistway through a door opening of the hoistway, which door opening leads from a landing into the hoistway.

In a preferred embodiment, the hoisting rope can be round in cross section or a belt, for example. The hoisting rope can comprise a coating comprising polymer material, which is advantageous since thereby it can be made to have high friction contact with the drive wheel.

In a preferred embodiment, the hoisting rope comprise one or more load bearing members made of composite material comprising reinforcing fibers embedded in polymer matrix, said reinforcing fibers preferably being carbon fibers or glass fibers. This is advantageous since thereby it can be light, and the hoisting rope can be pulled from the rope reel effectively with the drive wheel also in high-rise elevator systems where ropes are very long. A rope of the above defined kind has been presented in document WO2009090299A1. Alternatively, the hoisting rope can comprise metallic load bearing members.

In a preferred embodiment, the arrangement moreover comprises a guide device for guiding movement of the section of the hoisting rope extending between the rope reel and the braking device into the hoistway. Said guide device is preferably mounted in the door opening, which door opening leads from a landing into the hoistway. Said guide device preferably comprises two vertically displaced horizontal bars and the hoisting rope is arranged to pass from the rope reel the braking device through the opening formed between the bars.

The elevator is preferably such that it comprises an elevator car vertically movable and configured to serve two or more vertically displaced landings. Preferably, the car has an interior space suitable for receiving a passenger or passengers, and the car can be provided with a door for forming a closed interior space. The elevator is furthermore preferably configured to automatically control movement of the car based on state of push-buttons located at landing(s) and/or inside the elevator car.

### BRIEF DESCRIPTION OF THE DRAWINGS

In the following, the present invention will be described in more detail by way of example and with reference to the attached drawings, in which
Figure 1 illustrates an elevator arrangement implementing a method for installing a hoisting rope into an elevator system.
Figure 2 illustrates preferred details of the braking device of Figure 1 as viewed in axial direction of the brake wheel thereof.
Figure 3 illustrates preferred details of the braking device of Figure 2 as viewed in radial direction of the brake wheel thereof.
Figure 4 illustrates preferred details of the arrangement and method phase illustrated in Figure 1.
Figure 5 illustrates another elevator arrangement implementing the method for installing a hoisting rope into an elevator system.
Figures 6 and 7 illustrate elevator arrangement of Figure 5 at phases following phase shown in Figure 5.
The foregoing aspects, features and advantages of the invention will be apparent from the drawings and the detailed description related thereto.

### DETAILED DESCRIPTION

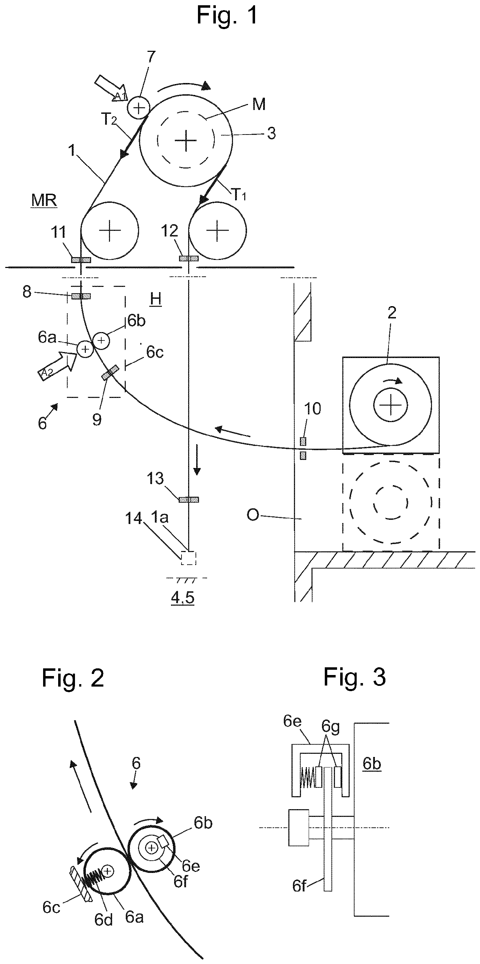

Figure 1 illustrates an elevator arrangement implementing a method for installing a hoisting rope 1 into an elevator system. The method comprises providing a rope reel 2 storing a hoisting rope 1, and thereafter unwinding a section of the hoisting rope 1 from the rope reel 2. The method further comprises arranging the unwound section of the hoisting rope 1, i.e. the section unwound from the rope reel 2, to pass from the rope reel 2 to a rim of a drive wheel 3 of the elevator and around it such that it rests against said rim; and thereafter rotating the drive wheel 3 with a motor M for driving the hoisting rope 1 to run around the drive wheel 3.

The hoisting rope 1 comprises two ends. The aforementioned unwound section is a section, which extends between an end of the hoisting rope and the rope reel. During said rotating, a first end (not showed) of the hoisting rope 1 is still on the rope reel 2. The second end 1a (opposite end), is on the opposite side of the drive wheel 3 than the first end. The second end 1a can hang in the hoistway H for being lowered to one of the elevator units, i.e. the elevator car 4 or a counterweight 5, as presented in Figure 1.

In the preferred embodiment illustrated in Figure 1, by said rotating, hoisting rope 1 is pulled from the rope reel 2 to the drive wheel 3. Preferably, said pull is arranged to cause unwinding of hoisting rope 1 from the rope reel 2, whereby no motorized unwinding device must be used in unity of the rope reel 2.

Since the hoisting rope 1 is pulled from the rope reel 2 to the drive wheel 3 by said rotating, the drive wheel 3 thereby serves as a traction wheel. To be able effectively and reliably to use the drive wheel 3 to pull the hoisting ropes 1, there must be a non-slipping engagement between the hoisting rope 1 and the drive wheel 3. In the preferred embodiment, the drive wheel 3 engages the hoisting rope 1 by friction which may be sensitive to slipping problems.

Generally, sufficient traction on the drive wheel is achieved only if the smaller rope force on the drive wheel is greater than zero. During installation this force can conventionally be practically zero because there is no load-caused tension in the ropes. In this case the ropes easily slip on the drive wheel 3, which could prevent pulling them with the drive wheel 3.

To provide sufficient traction during installation, in the preferred embodiment illustrated in Figure 1, the method further comprises braking movement of a section of the hoisting rope 1, which extends between the rope reel 2 and the drive wheel 3. The braking is performed by acting directly on said section which extends between the rope reel 2 and the drive wheel 3. Figure 1 illustrates by arrows rope forces T1 and T2. By aid of the braking, the rope force T2 can be maintained substantially above zero, whereby traction can be reliably maintained. On the opposite side, there can be a tensioning arrangement. For example, the second rope end 1a can be provided with a tensioner 14 pulled downwards by gravity, e.g. a tension weight or a device for guiding rope lowering and weighing more than 10 kg. Alternatively, maintaining of a desired rope force T1 can be ensured by a different means, or maintaining of sufficient rope force T1 can of course be also omitted since weight of the hoisting rope 1 itself and/or guidance with a guide device 13 may provide that the rope force T1 does not fall too low.

To provide sufficient traction during installation, and particularly to increase normal force between the drive wheel 3 and the hoisting rope 1, the hoisting rope 1 is preferably compressed against the rim of a drive wheel 3 with a rotatable compression roller 7. The compression roller 7 can be freely rotating, for instance. Arrow A1 in Figure 1 illustrates direction of compression. For enabling compression the arrangement preferably comprises an urging means for urging the compression member towards the rim of the drive wheel 3, such as one or more springs.

In the preferred embodiment, the drive wheel 3 is mounted in a machine room MR located above a hoistway H, and the rope passes via the hoistway H from the rope reel 3 into the machine room MR and to the drive wheel 3. The braking is performed inside the hoistway H with a braking device 6 mounted inside the hoistway H below the machine room MR.

The braking device 6 preferably comprises a rotatable brake wheel 6b arranged to brake movement of the hoisting rope 1. In the preferred embodiment illustrated, the braking device 6 comprises a pair of rotatable rope wheels 6a,6b compressing the hoisting rope 1 from opposite sides between them, at least one of the rope wheels 6a,6b being a brake wheel arranged to brake movement of the rope 1 extending between the pair of rope wheels 6a,6b. The braking device 6 comprises a frame 6c via which the pair of rotatable rope wheels 6a,6b is mounted inside the hoistway H. The frame 6c is preferably stationary in the hoistway H at least the time of said rotating. Compression from opposite sides of the hoisting rope 1 provides that the brake wheel 6b can effectively transmit braking force on the hoisting rope 1 surface.

The method preferably further comprises during said rotating guiding movement of the rope 1 departing from the braking device 6 with a first guide device 8 upwards in the hoistway H, wherein the first guide device 8 is preferably located inside the hoistway H.

The method preferably further comprises during said rotating guiding movement of the hoisting rope 1 to the braking device 6 with a second guide device 9, wherein the second guide device 9 is preferably located inside the hoistway H. Said first guide device 8 and said second guide device 9 are preferably mounted on a frame, which preferably is the frame 6c of the braking device 6. Said first guide device 8 and said second guide device 9 preferably each comprises a guide opening through which the hoisting rope 1 passes.

Figures 2 and 3 illustrate further preferred features of the braking device 6.

For enabling compression of the hoisting rope 1 from opposite sides thereof, the braking device 6 comprises an urging means 6d for urging the rotatable rope wheels 6a,6b towards each other. Arrow A2 in Figure 1 illustrates direction of compression produced. The urging means 6d are preferably in the form of one or more springs, as illustrated, but could alternatively be also different. In the preferred embodiment, the urging means 6d act directly on one of the pair of rope wheels 6a,6b as illustrated. However, there could alternatively be for each rope wheel 6a,6b such an urging means 6d. Alternatively, an urging means could be coupled to both of the rope wheels 6a,6b to pull them towards each other thereby directly acting on both of the rope wheels 6a,6b.

For enabling the braking function, the braking device 6 comprises at least one braking member 6h for braking rotation of said brake wheel 6b, said braking member 6g preferably being a friction pad movably mounted, e.g. via a brake caliper 6e, on a frame 6c of the braking device 6 and arranged to act on a rotatable part of the brake wheel 6b or a part 6f fixedly connected with the brake wheel 6b for braking rotation thereof. As illustrated in Figure 3, said braking member 6g can be a braking member of a floating caliper brake comprised in the braking device 6. The brake caliper is marked in Figures 2 and 3 with reference numeral 6e.

The rope reel 2 is preferably located outside the hoistway H during said rotating. More precisely, the rope reel 2 is preferably located on a landing of the elevator system outside the hoistway H during said rotating. The hoisting rope 1 can pass from the rope reel 2 into the hoistway H through a door opening O of the hoistway H, which door opening O leads from a landing into the hoistway H.

The hoistway H accommodates an elevator car 4 and/or a counterweight 5 during said rotating, so the hoisting rope 1 can be connected with the elevator car 4 and/or a counterweight 5 after the rotating. Particularly, the rope end is moved into proximity of the elevator car 4 or the counterweight 5 by rotating the drive wheel 3 with a motor M, and thereafter fixed to the elevator car 4 or the counterweight 5.

At a suitable moment after said rotating, and before the elevator system is taken into use for transporting passengers and/or goods, the braking device is removed from the hoistway H. Likewise, at a suitable moment after said rotating, and before the elevator system is taken into use for transporting passengers and/or goods, the compression roller 7 is removed. Likewise, at a suitable moment after said rotating, and before the elevator system is taken into use for transporting passengers and/or goods, each guide device 8-13 is removed.

The elevator system is taken into use for transporting passengers and/or goods after the hoisting rope 1 is fixed to an elevator car 4 (and counterweight 5 if the elevator is a counterweighted elevator).

The arrangement for installing a hoisting rope of an elevator according to the invention is illustrated in Figure 1 and comprises a rope reel 2 storing a length of a hoisting rope 1; a drive wheel; and a motor M for rotating the drive wheel 3. The motor M can be an electric motor for example. A section, which has been unwound from the rope reel 2, of the hoisting rope 1 passes from the rope reel 2 to a rim of the drive wheel 3 of the elevator and around it such that it rests against said rim, and the motor M is arranged to rotate the drive wheel 3 for driving the hoisting rope 1 to run around the drive wheel 3.

The rope reel 2 is arranged to unwound during said rotating. By said rotating, hoisting rope 1 is arranged to be pulled from the rope reel 3 to the drive wheel 3. Said pull is arranged to cause unwinding of hoisting rope 1 from the rope reel 2.

Preferred further features of the arrangement have already been described above in context of the method. Accordingly, the arrangement preferably comprises a braking device 6 for braking movement of the section of the hoisting rope 1, which extends between the rope reel 2 and the drive wheel 3, wherein the braking device 6 is arranged to act directly on said section of the hoisting rope 1, which extends between the rope reel 2 and the drive wheel 3.

The braking device 6 comprises a brake wheel 6b arranged to brake movement of the hoisting rope 1.

In the arrangement, the hoisting rope 1 departs from the braking device 6 upwards in vertical direction or at an angle from vertical direction. The braking device 6 is mounted inside the hoistway H below the machine room MR.

The hoisting rope 1 comprises two ends. The aforementioned unwound section is a section, which extends between an end of the hoisting rope and the rope reel 2. The first end (not shown) of the hoisting rope 1 is still on the rope reel 2, and the second end 1a, is on the opposite side of the drive wheel 3 than the first end. The second end 1a can hang in the hoistway H for being lowered to one of the elevator units, i.e. the elevator car 4 or a counterweight 5, as presented in Figure 1.

The drive wheel 3 is mounted in a machine room MR located above a hoistway H, and the rope passes via the hoistway H into the machine room MR.

The braking device 6 preferably comprises a rotatable brake wheel 6b arranged to brake movement of the hoisting rope 1. The braking device 6 comprises a frame 6c via which the brake wheel 6b is mounted inside the hoistway H. In the preferred embodiment illustrated, the braking device 6 particularly comprises a pair of rotatable rope wheels 6a,6b compressing the hoisting rope 1 from opposite sides between them, at least one of the rope wheels 6a,6b being a brake wheel arranged to brake movement of the rope 1 extending between the pair of rope wheels 6a,6b. The braking device 6 comprises a frame 6c via which the pair of rotatable rope wheels 6a,6b is mounted inside the hoistway H.

The arrangement moreover comprises a first guide device 8 located inside the hoistway H for guiding movement of the rope 1 departing from the braking device 6 upwards in the hoistway H. The arrangement moreover comprises a second guide device 9 located inside the hoistway H for guiding movement of the rope 1 from the rope reel 2 to the braking device 6. Each said guide device 8, 9 is preferably mounted on the frame 6c of the braking device 6. The frame 6c is stationary in the hoistway H.

The rope reel 2 is preferably located outside the hoistway H. More precisely, the rope reel 2 is preferably located on a landing of the elevator system outside the hoistway H. The hoisting rope 1 can pass from the rope reel 2 into the hoistway H through a door opening O of the hoistway H, which door opening O leads from a landing into the hoistway H.

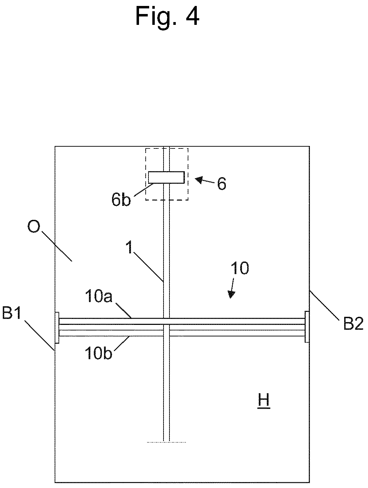

The arrangement moreover comprises a third guide device 10 for guiding movement of the section of the hoisting rope 1 extending between the rope reel 2 and the braking device 6. Preferred features of the third guide device 10 have been illustrated in Figure 4 showing a view from an elevator landing. Said third guide device 10 is preferably mounted in a door opening O, in particular on vertical border portions B1,B2 bordering the door opening O, which door opening O leads from a landing into the hoistway H. Said guide device preferably comprises two vertically displaced horizontal bars 10a,10b and the hoisting rope is arranged to pass from the rope reel 2 the braking device 6 through the opening formed between the bars 10a,10b.

The arrangement can, but need not, moreover comprise a fourth guide device 11 for guiding the hoisting rope from a floor opening of the machine room MR towards the drive wheel 3 or a diverting wheel around which the hoisting rope 1 passes from the floor opening to the drive wheel 3 and/or a fifth guide device 12 for guiding the hoisting rope from the drive wheel 3 into a floor opening of the machine room MR.

As mentioned, during said rotating, one end of the hoisting rope 1 is still on the rope reel 2, and the second end 1a can hang in the hoistway H for being lowered to one of the elevator units, i.e. the elevator car 4 or a counterweight 5, as presented in Figure 1. This is preferable when the elevator system being be roped is to have a 1:1 hoisting ratio. However, instead of hanging in the hoistway H, said second end can be already prior to the rotating be fixed to the upper parts of the hoistway H or its proximity, whereby a loop will be lowered by said rotating to one of said elevator units, i.e. the elevator car 4 or a counterweight. This will be advantageous if the elevator system being roped is to have a 2:1 hoisting ratio.

Above, the method has been describing referring to a hoisting rope 1. However, by the method plurality of hoisting ropes 1 could be installed, such as from the same or different rope reels into the elevator system simultaneously in the manner as defined.

In a preferred embodiment, the hoisting rope 1 comprises one or more load bearing members made of composite material comprising reinforcing fibers embedded in polymer matrix, said reinforcing fibers preferably being carbon fibers or glass fibers. This is advantageous since thereby it can be light, and the hoisting rope can be pulled from the rope reel effectively with the drive wheel also in high-rise elevator systems where ropes are very long. A rope of the above defined kind has been presented in document WO2009090299A1. Alternatively, the hoisting rope can comprise metallic load bearing members.

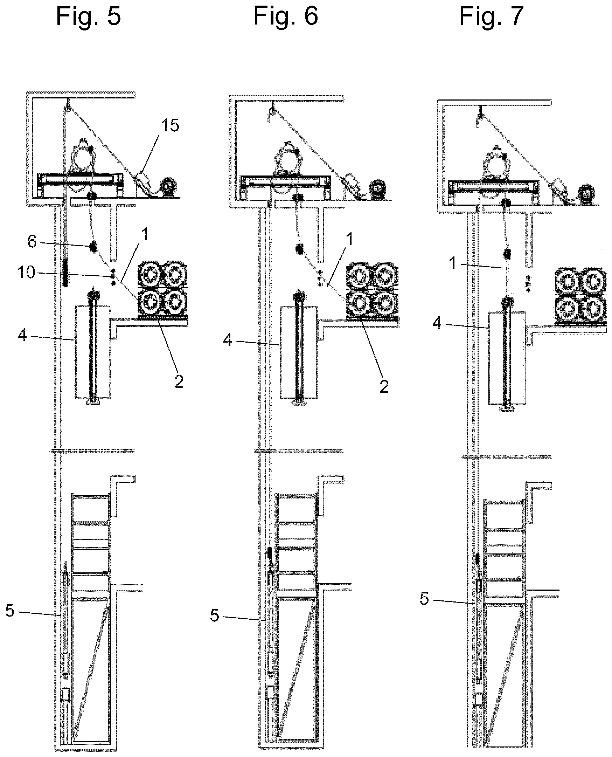

Figure 5 illustrates another elevator arrangement implementing the method for installing a hoisting rope 1 into an elevator system. The method is in this case implemented generally as described above referring to Figure 1, but with some differences in the arrangement as compared to that of Figure 1. For example, a further feature that the second end is lowered by aid of a auxiliary lowering hoist 15 to proximity of the counterweight 5. The auxiliary lowering hoist 15 is however not necessary due to the advantageous aspects of the invention, but possibly used for better control of the lowering. The rope wheel configuration is also slightly different from that of Figure 1. Figure 6 illustrates the method at stage where the hoisting rope 1, particularly the second end thereof, has been fixed to the counterweight 5. Figure 6 illustrates the method at stage where the hoisting rope 1, particularly the first end thereof, has been detached from the rope reel 2 and fixed to the elevator car 4.

In the preferred embodiments, the invention is implemented in context of an elevator with a machine room. However, at least some of the advantages can be achieved also if the elevator would be machineroomless.

In the preferred embodiments, the preferred location of the braking device is inside the hoistway H. However, at least some of the advantages can be achieved also if the braking device is elsewhere, such as fixed to a stationary frame suspending the rope reel 2.

It is to be understood that the above description and the accompanying Figures are only intended to teach the best way known to the inventors to make and use the invention. It will be apparent to a person skilled in the art that the inventive concept can be implemented in various ways. The above-described embodiments of the invention may thus be modified or varied, without departing from the invention, as appreciated by those skilled in the art in light of the above teachings. It is therefore to be understood that the invention and its embodiments are not limited to the examples described above but may vary within the scope of the claims.

## Claims

1. A method for installing a hoisting rope (1) into an elevator system, the method comprising
providing a rope reel (2) storing a hoisting rope (1); and thereafter
unwinding a section of the hoisting rope (1) from the rope reel (2); and
arranging said section to pass from the rope reel (2) to a rim of a drive wheel (3) of the elevator and around it such that it rests against said rim; and thereafter
rotating the drive wheel (3) with a motor (M) for driving the hoisting rope (1) to run around the drive wheel (3).

2. A method according to claim 1, wherein by said rotating, hoisting rope (1) is pulled from the rope reel (2) to the drive wheel (3).

3. A method according to any of the preceding claims, wherein the method further comprises braking movement of a section of the hoisting rope (1), which extends between the rope reel (2) and the drive wheel (3), in particular by acting directly on said section of the hoisting rope (1), which extends between the rope reel (2) and the drive wheel (3).

4. A method according to any of the preceding claims, wherein the braking is performed with a braking device (6) mounted inside the hoistway (H), preferably below a machine room (MR) of the elevator.

5. A method according to any of the preceding claims, wherein the braking device (6) comprises a rotatable brake wheel (6b) by which movement of the rope (1) is braked in said braking.

6. A method according to any of the preceding claims, wherein the braking device (6) comprises a frame (6c) via which the brake wheel (6b) is mounted inside the hoistway (H).

7. A method according to any of the preceding claims, wherein the method further comprises during said rotating guiding movement of the rope (1) departing from the braking device (6) with a first guide device (8) located inside the hoistway (H), preferably upwards in the hoistway (H).

8. A method according to any of the preceding claims, wherein the method further comprises during said rotating guiding movement of the rope (1) to the braking device (6) with a second guide device (9) located inside the hoistway (H).

9. A method according to any of the preceding claims 6-8, wherein the first and/or the second guide device (8, 9) is/are mounted on a frame (6c) of the braking device (6).

10. A method according to any of the preceding claims, wherein the method further comprises during said rotating guiding movement of the rope (1) from the rope reel 2 into the hoistway H with a third guide device (10), wherein said third guide device (10) is preferably mounted in the door opening O, which door opening O leads from a landing into the hoistway H.

11. A method according to any of the preceding claims, wherein the hoisting rope (1) is compressed against the rim of a drive wheel (3) with a rotatable compression roller (7).

12. A method according to any of the preceding claims, wherein the hoistway (H) accommodates an elevator car (4) and/or a counterweight (5) during said rotating, and an end (1a) of the hoisting rope (1) is moved into proximity of the elevator car (4) or the counterweight (5) by rotating the drive wheel (3) with a motor (M), and thereafter fixed to the elevator car (4) or the counterweight (5).

13. A method according to any of the preceding claims, wherein after said rotating, and before the elevator system is taken into use for transporting passengers and/or goods, the braking device (6) is removed from the hoistway (H).

14. An arrangement for installing a hoisting rope of an elevator comprising
a rope reel (2) storing a length of a hoisting rope (1);
a drive wheel (3); and
a motor (M) for rotating the drive wheel (3);
wherein a section of the hoisting rope (1) passes from the rope reel (2) to a rim of the drive wheel (3) of the elevator and around it such that it rests against said rim, and the motor (M) is arranged to rotate the drive wheel (3) for driving the hoisting rope (1) to run around the drive wheel (3).

15. An arrangement according to claim 14, wherein the arrangement comprises a braking device (6) for braking movement of the section of the hoisting rope (1), which extends between the rope reel (2) and the drive wheel (3), wherein braking device (6) is preferably arranged to act directly on said section of the hoisting rope (1), which extends between the rope reel (2) and the drive wheel (3).
